# EUROPEAN PATENT SPECIFICATION

(11) **EP 2 537 408 B1**
(45) Date of publication and mention of the grant of the patent: **09.11.2016**
(21) Application number: 11180111.4
(22) Date of filing: 06.09.2011
(51) Int. Cl.: A01F 15/07, A01F 15/18

(54) **Roller for an agricultural baler**
Walze für eine landwirtschaftliche Ballenpresse
Rouleau pour une presse à bales agricole

(30) Priority: 21.06.2011 DE 102011051221
(43) Date of publication of application: 26.12.2012
(73) Proprietor: Usines Claas France S.A.S, 57140 Metz (FR)
(72) Inventor: Rongvaux, Laurent, 55160 Butgneville (FR); Baros, Geoffroy, 90130 Montreux Chateau (FR)
(74) Representative: Belda, Stefan Johannes

(56) References cited:
- EP-A1- 1 834 518
- EP-A1- 1 927 279
- DE-A1- 3 940 744
- US-A- 3 467 002
- US-A- 5 181 461

## Description

The invention relates to a roller for an agricultural baler according to the preamble of claim 1. In addition, the invention relates to a method for the production of such a roller.

Agricultural balers, in particular round balers, are equipped with a plurality of rollers which are mounted rotatably about a rotation axis with respect to the housing of the press. Depending on the type of construction of the baler, the rollers are arranged peripherally or partially peripherally around the pressing chamber, in order to completely or partially delimit the pressing chamber at its periphery.

A main function of the rollers consists in applying compressive forces onto the material for pressing, in order to compact this into a bale in the pressing chamber. Partially, very high forces act here onto the individual rollers. The rollers arranged in the lower region of the pressing chamber are particularly highly stressed, because in addition to the stressing by compressive forces, they also have to bear the net weight of the bales, weighing up to tons. This requires a correspondingly robust construction of the rollers.

In addition, the rollers are given a conveying function, for which reason they are mounted rotatably on the press housing and are either actively driven or undertake at least a passive conveying. To guarantee a good conveying effect, the roller surfaces are therefore mostly provided with a profiling which, furthermore, can also contribute to a systematic processing (for example squeezing or marking) of the material for pressing. Owing to the high forces acting on the outer peripheral surface of the rollers, these are exposed to intensive wear.

In rollers known from the prior art, the peripheral surface of the rollers is produced from a metal sheet which is welded to form a tube, which in turn is welded with a roller core of basic cylindrical shape. Such rollers are indeed very robust but have a high net weight and, due to the welding, are only able to be produced with great effort. In the case of wear of the peripheral surface, the entire roller must be exchanged, because a replacement of the peripheral surface can take place practically only with the destruction or damage of the roller core.

To facilitate the exchange of a worn peripheral surface, EP 1 927 279 proposes to provide rollers with a casing which is exchangeable with respect to the roller core, wherein the exchangeability of the casing is to be ensured in that it is secured in a force-fitting manner, preferably by shrink fitting, on the roller core.

A disadvantage in the type of construction described is that for the proposed shrink fitting, a thermal treatment of the casing is necessary. This constitutes a particular production expenditure, which accordingly also occurs on dismantling.

It is an object of the present invention to indicate an alternative structure of a roller, according to which the roller is able to be manufactured with minimal production expenditure and is able to be disassembled in a simple manner, as far as possible non-destructively, for maintenance or repair purposes. A corresponding production method is to be indicated.

The problem is solved by a roller having the features of claim 1.

According to the invention, the casing surrounding the roller core - deviating from the single-piece structure known hitherto - is accordingly formed from several shell elements. A multi-part structure of shell elements, which respectively only partially circumferentially surround the superficies surface of the roller core which is cylindrical in its basic shape, offers the advantage that the casing can be manufactured with minimal production expenditure - and hence in a favourably priced manner - simply by connection of the shell elements with each other. In particular, a welding for the production of a circumferentially closed casing is dispensed with. With the use of a suitable connecting technique between the shell elements or respectively between the shell elements and the roller core, at the same time a simple and non-destructive dismantling of the casing is possible, so that the wearing parts of the roller, in particular the shell parts themselves, can be exchanged with minimal effort.

The shell elements which come into use are expediently components of similar type, which are preferably even constructed in a uniform manner. In this case, the several shell elements are non-variable parts which are able to be produced or respectively stored at a favourable cost.

To achieve a simple dismantling, if applicable even a capability of being repeatedly dismantled, the shell elements here are preferably connected with each other so as to be detachable. Detachable connections for the shell elements are able to be realized in various ways. The shell elements are connected with each other directly in a form-fitting manner, i.e. without the assistance of a third connecting means. Thereby, a connection can be produced without a tool, wherein the dispensing with third connecting means, not belonging to the shell elements, constitutes a simplification in manufacture.

The shell elements can be shaped in different ways, in order to achieve the effect according to the invention. A particularly good manageability for mounting results when the several shell elements adjoin each other with the formation of a separating edge running approximately parallel to the rotation axis. Shell elements which are formed in this way can be manufactured at a favourable cost.

According to a preferred further development of the invention, the casing comprises precisely two shell elements, which surround the superficies surface of the roller core in the sense of two half shells. Through such an embodiment of the casing, the effects according to the invention are achieved in a structurally simple manner, wherein only two separating edges form between the half shell elements. Due to this, in this case also connections for the formation of the closed casing are only to be produced at the two separating edges.

Irrespective of the construction of the roller otherwise, in particular of the configuration of the shell elements otherwise, adjacent shell elements expediently touch each at shared contact sections, to which connecting elements are assigned for the connection of the shell elements. Such contact sections can extend over the entire axial extent of a contact section, which can correspond to the width of the roller, in order to offer as large a contact surface as possible.

The contact sections provided on the shell elements are preferably formed respectively by a margin section, pointing inwards, i.e. in the direction of the rotation axis, of the corresponding shell element. Such a margin section can be produced for example by simple bending of a corresponding material section of the shell element.

For the simple production of a connection between shell elements, at least a first connecting element is arranged on the contact section of a shell element, which first connecting element is able to be brought into connection with a corresponding second connecting element at the touching contact section of an adjacent shell element.

The first connecting element here is preferably a lug and the second connecting element is preferably a recess, which are respectively arranged on contact sections of shell elements which are to be connected such that two adjacent shell elements can be connected with each other in an axial joining direction in relation to the rotation axis. In this way, by simple means, a direct form-fitting connectability is created between the shell elements, according to which the shell elements are able to be assembled together with axial joining direction simply, i.e. without the assistance of third connecting means.

In addition, a screw connection can serve to secure the connection between adjacent shell elements.

Expediently, the shell elements are manufactured in a single piece from a laminar material, whereby their simple production is ensured.

In particular, a manufacture from metal comes into consideration for the shell elements, because the outer surfaces of the shell elements are exposed to intensive wear and metallic surfaces also have a high resistance to wear with good processability. According to an advantageous further development of the invention, the roller core of the roller consists of several substantially cylindrical core elements which are arranged adjoining each other axially in relation to the rotation axis. Such a construction of the roller core, particularly in combination with the casing divided into several shell elements, offers the advantage that with a corresponding configuration of the core elements, the roller can be produced in a simple and favourably priced manner in its individual parts and mounted to the part as a whole or respectively dismantled.

The problem named in the introduction is, in addition, solved by a method according to Claim 13. The method for the production of a roller for an agricultural baler, in particular of a roller as previously described, comprises according to the invention the steps: joining together and connecting of several shell elements to form a closed casing, inserting a roller core into the casing in axial direction and fastening the roller core with respect to the casing.

The invention is explained in further detail below with reference to the attached figures by the help of an example embodiment. Further details and advantages of the invention also emerge therefrom.
- Fig. 1: shows a diagrammatic side view of an agricultural round baler,
- Fig. 2: shows a perspective view of a roller according to the invention according to one example embodiment,
- Fig. 3: shows an exploded illustration of the roller of Fig. 2,
- Fig. 4: shows a view of the roller of Fig. 2 from the front, and
- Fig. 5: shows a view of the roller of Fig. 2 according to the sectional plane A-A indicated in Fig. 4.

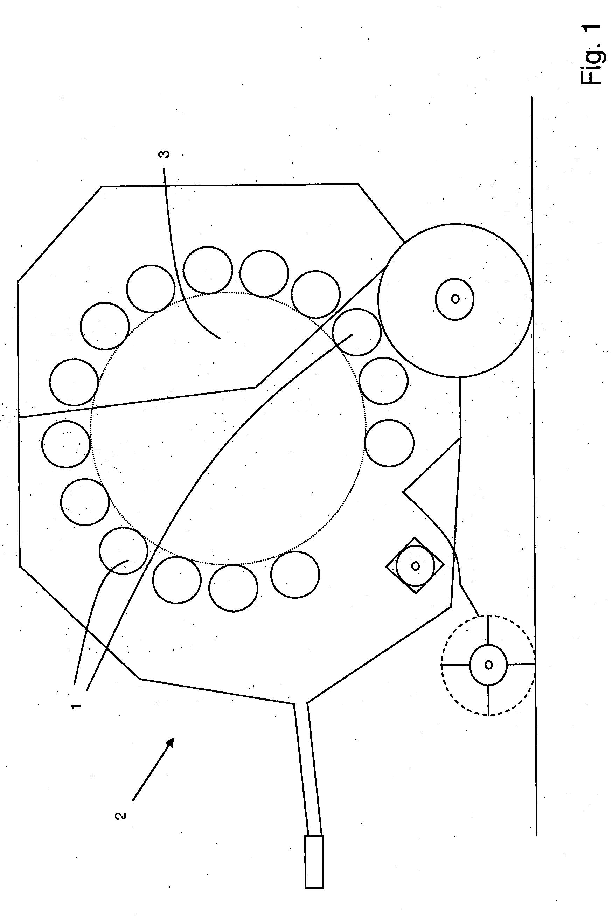

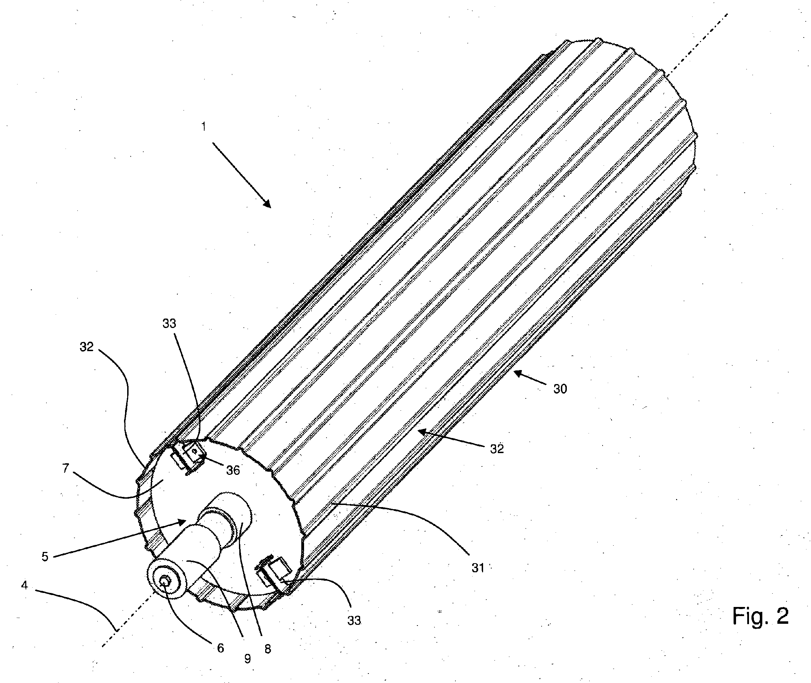

In Fig. 1 an agricultural round baler 2 is illustrated, which can be drawn over a field in order to collect mown plant material by means of a collecting arrangement (not indicated), to break it up by a cutting arrangement (not indicated) and to feed it to a pressing chamber 3. The pressing chamber 3 with an approximately cylindrical interior is delimited at its periphery by a plurality of rollers 1, mounted rotatably with respect to a housing (not indicated). The rollers 1 serve as pressing means for the plant material entering into the pressing chamber 3. The rollers 1, which are illustrated diagrammatically, are rollers 1 according to the invention, described in further detail below with the aid of Fig. 2 to 5.

It is pointed out that the round baler 2 shown in Fig. 1 has exclusively rollers 1 as pressing means. Deviating from this, in another type of construction of a press, a different number of rollers or respectively a different arrangement of the rollers can come into use. A combination of rollers with other pressing means, for example revolving belts, is also conceivable.

Fig. 2 to 5 show in different views an example embodiment of a roller 1 according to the invention, which can be installed into a round baler 2 according to Fig. 1 or into another agricultural baler. The function and effect of the roller 1 is described below with reference to Fig. 2 to 5.

Firstly, Fig. 2 shows a roller 1 according to the invention in assembled state, in perspective view. The roller 1 has a casing 30 which surrounds a roller core on the peripheral side. The roller core is covered towards the exterior on its superficies surface 11 by the casing 30, on its end faces by discs 7, and is therefore not visible in Fig. 2. A shaft 5 with a rotation axis 4, guided through the roller core, serves for the rotatable mounting of the roller 1. Sleeves 8, 9 are arranged on the shaft 5, which are secured axially by a screw 6. By the arrangement of the sleeves 8, 9 in combination with the screw 6 on the shaft 5, an axial clamping of the roller core on the shaft 5 is possible. The casing 30 of the roller 1 comprises two shell elements 32, which are constructed as half shells of equal shape with an outer profiling 31 serving for the processing and conveying of the material for pressing. The shell elements 32 have, in opposite regions, two respectively inwardly bent contact sections 33, which (viewed in axial direction) extend over the width of the roller 1. At the contact sections 33, the two shell elements 32 touch each other and are detachably connected with each other. Connecting elements, acting in a form-fitting manner, which are yet to be explained, which are constructed on the contact sections 33, serve for the connection. In addition, screw connections 36 come into use. The connection of the shell elements 32 is accordingly configured so as to be detachable.

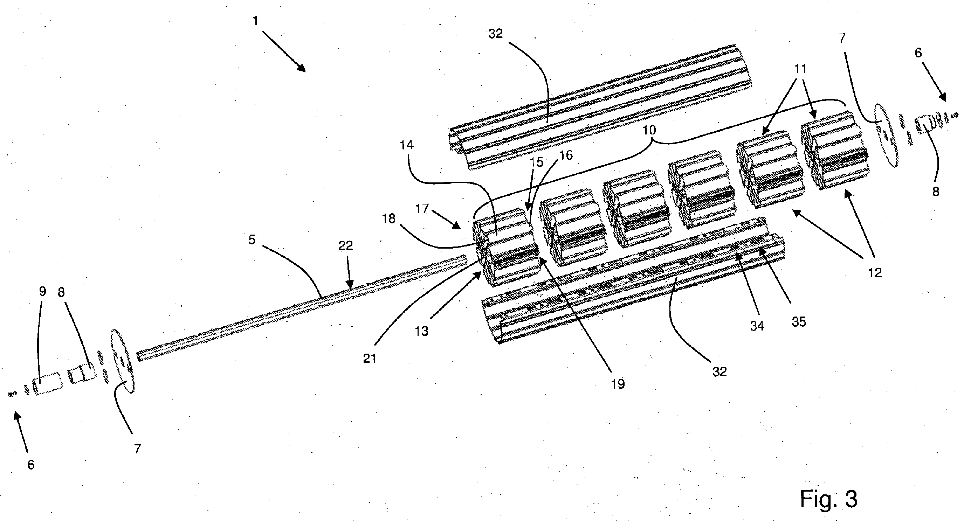

As can be seen from the exploded illustration of Fig. 3, the roller 1 has in the interior a roller core 10, which in the example embodiment consists of six core elements 12 of identical shape. Depending on the desired roller width, a different number of core elements 12 can be used. Each of the core elements 12 has a substantially cylindrical basic shape and is manufactured from plastic. The core elements 12 do not consist here of solid material, but rather have a hollow profile with reinforcements 13 running radially from the interior towards the exterior. Through the reinforcements 13, the core elements 12 are given a sufficiently high strength with a weight-saving light hollow construction. The core elements 12 have respectively a first end face 15, on which projections 16 are constructed, protruding from the end face 15 at an equal distance from each other over the periphery. Correspondingly, the core elements 12 have on their side facing away from the first end face 15 a second end face 17, on which depressions 18 are constructed which are worked into the end face 17, at equal distances from each other over the periphery. Through the end face profiling which is thus provided at the end faces 15 or respectively 17, the core elements 12 can be joined together in axial direction in a form-fitting manner such that torques can be transmitted via the core elements 12. The projections 16 and depressions 18 of adjacent core elements 12 engage here into each other and form a form fit.

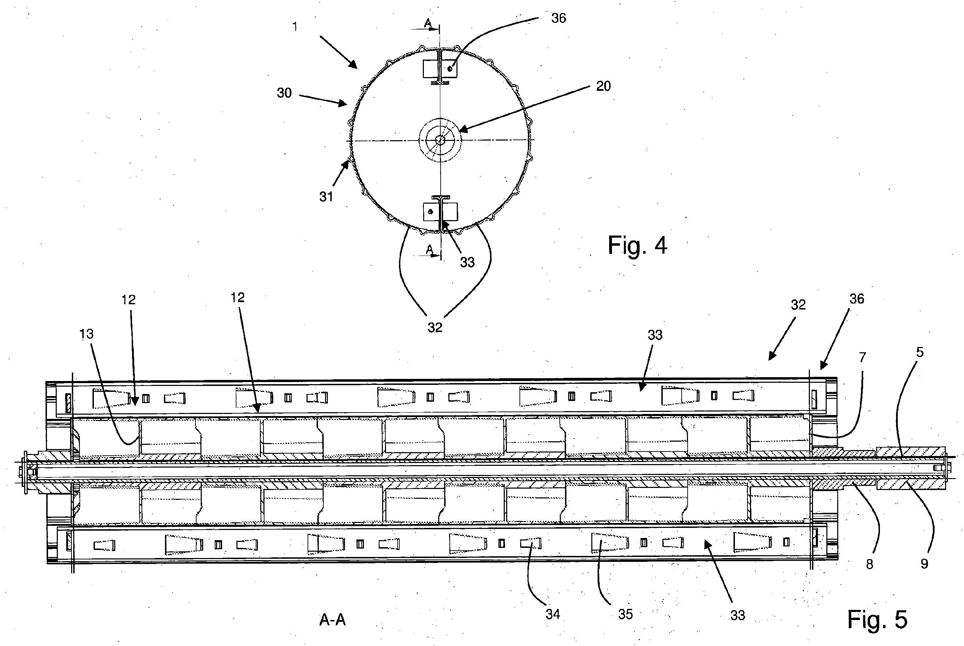

As can be seen from Fig. 4, a central passage 20, coinciding with the rotation axis of the roller 1, is formed in each case in the core elements 12. The shaft 5, illustrated in Fig. 3, can be guided through this passage 20. The shaft 5 has an outer profiling 22, which engages into an inner profiling 21 formed on the core elements 12 in the passage 20, in order to form a form-fitting shaft-hub connection, which makes possible a torque transmission to the drive of the roller 1 via the shaft 5.

As can be seen from Fig. 3, the six core elements 12 can be braced axially with respect to each other on the shaft 5. For this, on both sides of the roller core 10 respectively a disc 7 is pushed onto the shaft 5, which is secured substantially by sleeves 8 or respectively 9 and axial screws 6. The sleeves 8 serve for the mounting of the profiled shaft 5 in roller bearings, which are not shown, which can be provided on the housing of a baler for the rotatable mounting of the roller 1. The sleeve 9 serves for the spaced fastening of a toothed wheel - not shown - serving for the drive of the shaft 5.

The core elements 12 have on their peripheral surface a circumferential profiling 14 and two elongated, axially extending recesses 19 on diametrically opposite regions of the core elements 12.

The profiling 14 of the peripheral surface of the core elements 12 corresponds to the outer profiling 31 of the shell elements 32 already illustrated in Fig. 2. Accordingly, the profiling 14 engages on the inner side into the shell elements 32, in order to produce for each form fit an easily producible and re-detachable shaft-hub connection between roller core 10 and casing 30, so that torques can be transmitted here also.

The production of a roller 1 according to the invention takes place in the following manner: Firstly, the two shell elements 32 are joined together and connected to form a closed casing 30. For this, the shell elements 32 are brought into a position with contact sections 33 facing each other. As can be seen in Fig. 5, lugs 34 and recesses 35, serving as connecting elements, are formed alternately on the contact sections 33. The shell elements 32 are joined in axial direction with respect to each other by means of these connecting elements 34, 35, whereby the lugs 34 and recesses 35 of the shell elements 32 engage into each other in order produce a form-fitting connection between the shell elements 32 - and hence a closed casing 30.

The roller core 10 is subsequently inserted into the casing 30 in axial direction and is secured with respect to the casing 30. For this, firstly the six core elements 12 are placed against each other at their end faces 15, 17 and are thereby brought into form-fitting contact. The shaft 5 is guided through the passage 20 through the roller core 10 and an axial bracing of the roller core 10 takes place by means of the axial securing elements (disc 7, sleeves 8, 9, screw 6). Finally, the roller core 10 is introduced axially into the casing 30 and is secured by means of a screw connection 36 with respect to the casing 30. Elongated recesses 19, formed on the roller core 10, i.e. on the core elements 12, running in axial direction, receive the inwardly projecting contact sections 33 of the casing 30.

The roller 1 can be produced without welding and in the case of wear of individual components can be dismantled with minimal effort in a non-destructive manner for maintenance purposes or for other reasons. The high number of parts of identical type facilitates their storage and has a cost-reducing effect. The roller core 10, manufactured from plastic has a high strength, with a low weight owing to the configuration of the core elements 12, with the reinforcements 13, so that as a result a roller is created which has a long lifespan with a reduced overall weight compared with a conventional construction.

**List of reference numbers**

| | | | |
|---|---|---|---|
| 1 | roller | 30 | casing |
| 2 | round baler | 31 | outer profiling |
| 3 | pressing chamber | 32 | shell element |
| 4 | rotation axis | 33 | contact section |
| 5 | shaft | 34 | lug |
| 6 | screw | 35 | recess |
| 7 | disc | 36 | screw connection |
| 8 | sleeve | | |
| 9 | sleeve | | |
| 10 | roller core | | |
| 11 | superficies surface | | |
| 12 | core element | | |
| 13 | reinforcement | | |
| 14 | profiling | | |
| 15 | first end face | | |
| 16 | projection | | |
| 17 | second end face | | |
| 18 | depression | | |
| 19 | elongated recess | | |
| 20 | passage | | |
| 21 | inner profiling | | |
| 22 | outer profiling | | |

## Claims

1. A roller (1) for an agricultural baler (2), comprising a roller core (10) rotatable about a rotation axis (4), the superficies surface (11) of which roller core (10) is surrounded by a casing (30), wherein the casing (30) consists of several shell elements (32) surrounding the superficies surface (11) respectively partially circumferentially, which shell elements (32) are detachably connected with each other **characterized in that** said shell elements are connected with each other directly in a form-fitting manner to form a circumferentially closed casing (30).

2. The roller according to claim 1, **characterized in that** the several shell elements (32) are constructed uniformly.

3. The roller according to one of the preceding claims, **characterized in that** the several shell elements (32) adjoin each other with the formation of a separating edge running approximately parallel to the rotation axis (4).

4. The roller according to one of the preceding claims, **characterized in that** the casing (30) comprises precisely two shell elements (32), which surround the superficies surface (11) of the roller core (10) in the sense of two half shells.

5. The roller according to one of the preceding claims, **characterized in that** adjacent shell elements (32) touch each other at shared contact sections (33), to which connecting elements (34, 35) are assigned for the connection of the shell elements (32).

6. The roller according to one of the preceding claims, **characterized in that** contact sections (33) provided on the shell elements (32) are formed respectively by an inwardly pointing margin section of the corresponding shell element (32).

7. The roller according to one of claims 5 or 6, **characterized in that** at the contact section (33) of a shell element (32) at least a first connecting element (34) is arranged, which is able to be brought into connection with a corresponding second connecting element (35) at the touching contact section (33) of an adjacent shell element (32).

8. The roller according to claim 7, **characterized in that** the first connecting element (34) is a lug and the second connecting element is a recess (35), which are respectively arranged on contact sections (33) of shell elements (32) which are to be connected, such that two adjacent shell elements (32) can be connected with each other in an axial joining direction in relation to the rotation axis (4).

9. The roller according to one of the preceding claims, **characterized in that** at least one screw connection (36) serves for securing the connection between adjacent shell elements (33).

10. The roller according to one of the preceding claims, **characterized in that** the shell elements (32) are manufactured in one piece from a laminar material.

11. The roller according to one of the preceding claims, **characterized in that** the shell elements (32) are manufactured from metal.

12. The roller according to one of the preceding claims, **characterized in that** the roller core (10) consists of several substantially cylindrical core elements (12), which are arranged adjoining each other axially in relation to the rotation axis (4).

13. A method for the production of a roller (1) for an agricultural baler (2) according to one of the preceding claims, comprising the steps:
joining together and detachably connecting several shell elements (32) with each other directly in a form-fitting manner to form a closed casing (30),
inserting a roller core (10) into the casing (30) in axial direction and
securing the roller core (10) with respect to the casing (30).

## Patentansprüche

1. Walze (1) für eine landwirtschaftliche Ballenpresse (2), welche einen um eine Drehachse (4) drehbaren Walzenkern (10) umfasst, wobei die Mantelfläche (11) des Walzenkerns (10) von einem Gehäuse (30) umgeben ist, wobei das Gehäuse (30) aus mehreren die Mantelfläche (11) jeweils teilweise umfangsseitig umgebenden Schalenelementen (32) besteht, wobei die Schalenelemente (32) lösbar miteinander verbunden sind, **dadurch gekennzeichnet, dass** die Schalenelemente in formschlüssiger Weise direkt miteinander verbunden sind, um ein umfangsseitig geschlossenes Gehäuse (30) zu bilden.

2. Walze nach Anspruch 1, **dadurch gekennzeichnet, dass** die mehreren Schalenelemente (32) gleichförmig aufgebaut sind.

3. Walze nach einem der vorhergehenden Ansprüche, **dadurch gekennzeichnet, dass** die mehreren Schalenelemente (32) unter Bildung einer ungefähr parallel zur Drehachse (4) verlaufenden Trennkante aneinander angrenzen.

4. Walze nach einem der vorhergehenden Ansprüche, **dadurch gekennzeichnet, dass** das Gehäuse (30) exakt zwei Schalenelemente (32) umfasst, welche die Mantelfläche (11) des Walzenkerns (10) im Sinn von zwei Halbschalen umgeben.

5. Walze nach einem der vorhergehenden Ansprüche, **dadurch gekennzeichnet, dass** benachbarte Schalenelemente (32) einander an gemeinsamen Kontaktabschnitten (33) berühren, welchen Verbindungselemente (34, 35) für die Verbindung der Schalenelemente (32) zugeordnet sind.

6. Walze nach einem der vorhergehenden Ansprüche, **dadurch gekennzeichnet, dass** die auf den Schalenelementen (32) vorgesehenen Kontaktabschnitte (33) jeweils durch einen nach innen weisenden Randabschnitt des entsprechenden Schalenelements (32) gebildet sind.

7. Walze nach einem der Ansprüche 5 oder 6, **dadurch gekennzeichnet, dass** an dem Kontaktabschnitt (33) eines Schalenelements (32) mindestens ein erstes Verbindungselement (34) angeordnet ist, welches mit einem entsprechenden zweiten Verbindungselement (35) an dem berührenden Kontaktabschnitt (33) eines benachbarten Schalenelements (32) in Verbindung gebracht werden kann.

8. Walze nach Anspruch 7, **dadurch gekennzeichnet, dass** das erste Verbindungselement (34) eine Lasche ist und das zweite Verbindungselement eine Ausnehmung (35) ist, welche jeweils auf den Kontaktabschnitten (33) der zu verbindenden Schalenelemente (32) derart angeordnet sind, dass zwei benachbarte Schalenelemente (32) miteinander in einer axialen Verbindungsrichtung relativ zur Drehachse (4) verbunden werden können.

9. Walze nach einem der vorhergehenden Ansprüche, **dadurch gekennzeichnet, dass** mindestens eine Schraubenverbindung (36) zur Sicherung der Verbindung zwischen benachbarten Schalenelementen (33) dient.

10. Walze nach einem der vorhergehenden Ansprüche, **dadurch gekennzeichnet, dass** die Schalenelemente (32) einstückig aus einem flächigen Material hergestellt sind.

11. Walze nach einem der vorhergehenden Ansprüche, **dadurch gekennzeichnet, dass** die Schalenelemente (32) aus Metall hergestellt sind.

12. Walze nach einem der vorhergehenden Ansprüche, **dadurch gekennzeichnet, dass** der Walzenkern (10) aus mehreren im Wesentlichen zylindrischen Kernelementen (12) besteht, welche relativ zur Drehachse (4) axial aneinander angrenzend angeordnet sind.

13. Verfahren zur Herstellung einer Walze (1) für eine landwirtschaftliche Ballenpresse (2) nach einem der vorhergehenden Ansprüche, welches die folgenden Schritte umfasst:
Zusammenfügen und lösbares Verbinden von mehreren Schalenelementen (32) direkt miteinander in formschlüssiger Weise, um ein geschlossenes Gehäuse (30) zu bilden,
Einbringen eines Walzenkerns (10) in axialer Richtung in das Gehäuse (30) und
Sichern des Walzenkerns (10) mit Bezug auf das Gehäuse (30).

## Revendications

1. Rouleau (1) pour une presse agricole (2), comprenant un noyau de rouleau (10) pouvant tourner autour d'un axe de rotation (4), la surface superficielle (11) dudit noyau de rouleau (10) étant entourée par un carter (30), le carter (30) étant constitué de plusieurs éléments formant coque (32) entourant la surface superficielle (11) chaque fois de manière partiellement circonférentielle, lesquels éléments formant coque (32) sont connectés les uns aux autres de manière détachable, **caractérisé en ce que** lesdits éléments formant coque (32) sont connectés les uns aux autres directement par complémentarité de formes pour former un carter (30) fermé circonférentiellement.

2. Rouleau selon la revendication 1, **caractérisé en ce que** lesdits plusieurs éléments formant coque (32) sont de construction identique.

3. Rouleau selon l'une des revendications précédentes, **caractérisé en ce que** lesdits plusieurs éléments formant coque (32) se joignent avec formation d'une arête de séparation s'étendant approximativement parallèlement à l'axe de rotation (4).

4. Rouleau selon l'une des revendications précédentes, **caractérisé en ce que** le carter (30) comprend précisément deux éléments formant coque (32) qui entourent la surface superficielle (11) du noyau de rouleau (10) à la manière de deux demi-coques.

5. Rouleau selon l'une des revendications précédentes, **caractérisé en ce que** des éléments formant coque (32) adjacents se touchent l'un l'autre au niveau de sections de contact partagées (33) auxquelles sont associés des éléments de connexion (34, 35) pour la connexion des éléments formant coque (32).

6. Rouleau selon l'une des revendications précédentes, **caractérisé en ce que** les sections de contact (33) prévues sur les éléments formant coque (32) sont formées chaque fois par une section marginale tournée vers l'intérieur de l'élément formant coque (32) correspondant.

7. Rouleau selon l'une des revendications 5 ou 6, **caractérisé en ce que** sur la section de contact (33) d'un élément formant coque (32) est disposé au moins un premier élément de connexion (34) qui est apte à être connecté à un second élément de connexion (35) correspondant sur la section de contact (33) touchante d'un élément formant coque (32) adjacent.

8. Rouleau selon la revendication 7, **caractérisé en ce que** le premier élément de connexion (34) est une languette et le second élément de connexion est un évidement (35), lesquels sont respectivement disposés sur les sections de contact (33) d'éléments formant coque (32) à connecter, de sorte que deux éléments formant coque (32) adjacents peuvent être connectés ensemble dans une direction de jonction axiale par rapport à l'axe de rotation (4).

9. Rouleau selon l'une des revendications précédentes, **caractérisé en ce qu'**au moins une connexion à vis (36) sert à assujettir la connexion entre des éléments formant coque (33) adjacents.

10. Rouleau selon l'une des revendications précédentes, **caractérisé en ce que** les éléments formant coque (32) sont fabriqués d'une seule pièce dans un matériau laminé.

11. Rouleau selon l'une des revendications précédentes, **caractérisé en ce que** les éléments formant coque (32) sont fabriqués en métal.

12. Rouleau selon l'une des revendications précédentes, **caractérisé en ce que** le noyau de rouleau (10) est constitué de plusieurs éléments de noyau (12) sensiblement cylindriques qui sont disposés de manière adjacente les uns aux autres axialement par rapport à l'axe de rotation (4).

13. Procédé de production d'un rouleau (1) pour une presse agricole (2) selon l'une des revendications précédentes, comprenant les étapes consistant à :
joindre et connecter de manière détachable plusieurs éléments formant coque (32) les uns aux autres directement par complémentarité de formes pour former un carter (30) fermé,
insérer un noyau de rouleau (10) dans le carter (30) dans la direction axiale et
assujettir le noyau de rouleau (10) par rapport au carter (30).
